# EUROPÄISCHE PATENTSCHRIFT

(11) **EP 1 334 297 B1**
(45) Veröffentlichungstag und Bekanntmachung des Hinweises auf die Patenterteilung: **28.07.2004**
(21) Anmeldenummer: 01992851.4
(22) Anmeldetag: 06.11.2001
(51) Int. Cl.: F16H 61/00

(54) **STELLVORRICHTUNG FÜR EIN EINSTELLBARES GETRIEBE**
SETTING DEVICE FOR AN ADJUSTABLE GEARING MECHANISM
DISPOSITIF DE REGLAGE POUR BOITE DE VITESSES AJUSTABLE

(30) Priorität: 06.11.2000 DE 10054977
(43) Veröffentlichungstag der Anmeldung: 13.08.2003
(73) Patentinhaber: Siemens Aktiengesellschaft, 80333 München (DE)
(72) Erfinder: SCHEUERER, Ulf, 93047 Regensburg (DE); KROPP, Jens-Uwe, 93098 Mintraching (DE); SMIRRA, Karl, 83512 Wasserburg (DE)
(86) Internationale Anmeldenummer: PCT/DE2001/004159
(87) Internationale Veröffentlichungsnummer: WO 2002/036994

(56) Entgegenhaltungen:
- EP-A- 0 078 982
- DE-A- 3 438 718
- DE-A- 3 829 568
- DE-C- 4 422 257
- FR-A- 1 426 354
- US-A- 1 591 242
- US-A- 2 740 271
- US-A- 3 013 413
- US-A- 3 161 074
- US-A- 3 258 985
- US-A- 3 621 675
- US-A- 4 771 643
- US-A- 5 334 095
- US-A- 5 954 179
- US-A- 5 984 260
- PATENT ABSTRACTS OF JAPAN vol. 2000, no. 02, 29. Februar 2000 (2000-02-29) -& JP 11 325243 A (NIPPON SOKEN INC;DENSO CORP), 26. November 1999 (1999-11-26)

## Beschreibung

Die Erfindung betrifft eine Stellvorrichtung für ein einstellbares Getriebe, insbesondere zur Auswahl einer Parkstellung in einem Automatikgetriebe gemäß dem Oberbegriff des Anspruchs 1.

Herkömmliche Automatikgetriebe für Personenkraftwagen weisen in der Regel vier Vorwahlbereiche für die verschiedenen Betriebszustände des Personenkraftwagens auf, nämlich eine Parkstellung, eine Rückwärtsfahrstellung, eine Neutralstellung und eine Fahrstellung. In der Parkstellung wird durch einen mechanischen Verriegelungsmechanismus (Parksperre) verhindert, dass sich die Abtriebswelle des Automatikgetriebes und damit die Räder des Personenkraftwagens drehen, so dass ein unbeabsichtigtes Wegrollen des Personenkraftwagens verhindert wird.

Die Einstellung des gewünschten Vorwahlbereichs erfolgt durch den Fahrer, indem dieser einen Ganghebel betätigt, während die Verbindung zwischen dem Ganghebel und dem Automatikgetriebe beispielsweise durch elektrische Kabel erfolgen kann, wobei dieses Schaltprinzip als "shift by wire" bezeichnet wird. Hierbei muss jedoch sichergestellt werden, dass die Parksperre auch bei einem vollständigen Ausfall der Bordelektronik aktiviert werden kann.

Zur Lösung dieses Problems ist aus DE 44 22 257 C1 eine Stellvorrichtung für, ein Automatikgetriebe bekannt, die neben einem Elektromotor als Stellglied zur Einstellung des gewünschten Vorwahlbereichs im Normalbetrieb auch eine Wählspindel als Mitnehmer, eine Sperrklinke als Schlitten, einen Entriegelungshebel als steuerbares Verriegelungselement und eine Feder als mechanischen Energiespeicher aufweist, die es beim Ausfall des Elektromotors oder der Stromversorgung ermöglichen, die Parksperre zu aktivieren. Hierzu muss der Fahrer die im Normalbetrieb gespannte Feder lediglich durch einen Bowdenzug freigeben, woraufhin die Feder die Parksperre aktiviert.

Nachteilig an dieser bekannten Stellvorrichtung ist jedoch die Tatsache, dass zur Aktivierung der Parksperre bei einem Ausfall der Stromversorgung noch ein manueller Eingriff des Fahrers nötig ist, in dem dieser den Bowdenzug betätigt.

Weiterhin ist aus EP 0 198 114 B1 eine Stellvorrichtung für ein Zweistufengetriebe bekannt, bei der ein Elektromotor zur Einstellung der gewünschten Getriebestufe eine Stange axial verschiebt, wobei die Stange über eine Feder mit einem ebenfalls axial verschiebbaren Schlitten verbunden ist, der den Wählhebel des Getriebes mitnimmt. Der Schlitten kann hierbei durch ein ortsfestes elektromagnetisch steuerbares Verriegelungselement in Form eines Solenoiden in zwei Positionen verriegelt werden, wobei die beiden Positionen des Schlittens jeweils einer Getriebestufe entsprechen. Die Verschiebung der Stange durch den Elektromotor führt also aufgrund der Verriegelung des Schlittens durch das Verriegelungselement nicht zu einer Änderung der Getriebestufe, sondern lediglich zu einer Spannung der Feder. Bei einer Entriegelung des Schlittens treibt die gespannte Feder dann den Schlitten in die jeweils andere Stellung, so dass die andere Getriebestufe eingestellt wird. Das Verriegelungselement fixiert den Schlitten jedoch im Ruhezustand, so dass ein Ausfall des Stromversorgung oder eine Fehlfunktion des Verriegelungselementes nicht zu einer Änderung der Getriebestufe führt. Vielmehr verbleibt das Getriebe bei der vorstehend beschriebenen bekannten Stellvorrichung bei einem Ausfall der Stromversorgung in der gerade eingestellten Getriebestufe.

Der Erfindung liegt also die Aufgabe zugrunde, eine Stellvorrichtung für ein Automatikgetriebe zu schaffen, bei dem die Ansteuerung des Automatikgetriebes über elektrische Leitungen erfolgt, wobei die Parksperre auch bei einem vollständigen Ausfall der Bordelektronik aktiviert wird.

Die Aufgabe wird durch die Merkmale des Anspruchs 1 gelöst.

Die Erfindung umfasst die allgemeine technische Lehre, zusätzlich zu dem normalen mechanischen Stellglied für die Auswahl des Vorwahlbereichs des Automatikgetriebes einen mechanischen Energiespeicher vorzusehen, der bei einem Ausfall des normalen Stellglieds eine Aktivierung der Parksperre ermöglicht. Vorzugsweise handelt es sich bei einem derartigen Energiespeicher um eine Feder, beispielsweise in Form einer Schrauben- bzw. Spiralfeder, jedoch sind auch andere Arten von Energiespeichern möglich, die eine Aktivierung der Parksperre erlauben.

Bei einem herkömmlichen Automatikgetriebe erfolgt die Einstellung des Vorwahlbereiches des Automatikgetriebes üblicherweise über eine Steuerwelle, deren Winkelstellung den Vorwahlbereich bestimmt. Die Drehung der Steuerwelle erfordert jedoch üblicherweise relativ große Drehmomente von bis zu 12 Nm, so dass die Kraftübertragung von dem mechanischen Stellglied für die Auswahl des Vorwahlbereichs des Automatikgetriebes auf die den Vorwahlbereich bestimmende Steuerwelle über ein Zwischengetriebe erfolgt.

Die Krafteinleitung in das Zwischengetriebe erfolgt erfindungsgemäß über einen beweglich gelagerten Schlitten, wobei der Schlitten zum einen mit dem Energiespeicher und zum anderen über ein steuerbares Verriegelungselement mit dem Stellglied verbunden ist. Im verriegelten Zustand wirkt das Stellglied also auf den Schlitten und ermöglicht damit eine Einstellung des gewünschten Vorwahlbereichs. Bei einem Ausfall des Stellglieds wird das Verriegelungselement dagegen entriegelt, so dass der beweglich gelagerte Schlitten nur noch mit dem Energiespeicher verbunden ist und von diesem in die gewünschte Stellung geschoben wird, so dass das Automatikgetriebe den gewünschten Vorwahlbereich einnimmt. Vorzugsweise weist das steuerbare Verriegelungselement zur Verbindung des Schlittens mit dem Stellglied einen Elektromagneten auf, so dass das Verriegelungselement bei einem Stromausfall automatisch entriegelt wird und den beweglich gelagerten Schlitten dadurch freigibt.

Der Schlitten ist vorzugsweise linear verschiebbar, jedoch ist es prinzipiell auch denkbar, dass der Schlitten auf einer kreisförmigen oder andersartig gekrümmten Bahn verschoben wird.

In der bevorzugten Ausführungsform ist das Stellglied mit einem Mitnehmer verbunden, der parallel zu dem Schlitten verschiebbar gelagert ist, wobei das Verriegelungselement den Schlitten entweder mit dem Mitnehmer verbindet oder von diesem trennt. Im Normalbetrieb bei funktionierender Stromversorgung verbindet das Verriegelungselement also den Schlitten mit dem Mitnehmer, der von dem Stellglied angetrieben wird, so dass das Stellglied den Schlitten verschiebt und dadurch den gewünschten Vorwahlbereich des Automatikgetriebes einstellt. Bei einem Ausfall der Stromversorgung trennt das Verriegelungselement dagegen die Verbindung zwischen dem Mitnehmer und dem Schlitten, so dass das Stellglied nicht mehr auf den Schlitten wirkt, der dann von dem Energiespeicher in die gewünschte Stellung geschoben wird.

Bei einer Ausführung des Energiespeichers als Feder kann die Feder beispielsweise zwischen dem Mitnehmer und dem Schlitten angeordnet sein und den Mitnehmer gegenüber dem Schlitten vorspannen. Alternativ hierzu ist es jedoch auch möglich, dass die Feder zwischen dem Schlitten und einem raumfesten Gegenlager angeordnet ist und den Schlitten unabhängig von dem Mitnehmer gegenüber dem Gegenlager vorspannt. In beiden Fällen führt die Kraft der gespannten Feder bei einer Entriegelung von Schlitten und Mitnehmer dazu, dass der Schlitten von der Feder verschoben wird, woraufhin das Automatikgetriebe den gewünschten Vorwahlbereich einnimmt.

In einer Variante der Erfindung weist der Mitnehmer eine Führung zur verschiebbaren Lagerung des Schlittens auf, so dass der Schlitten relativ zu dem Mitnehmer verschiebbar ist. In einer anderen Variante der Erfindung ist dagegen für den Mitnehmer und den Schlitten jeweils eine Führung vorgesehen.

Andere vorteilhafte Weiterbildungen der Erfindung sind in den Unteransprüchen gekennzeichnet oder werden nachstehend zusammen mit der Beschreibung der bevorzugten Ausführungsbeispiel der Erfindung anhand der Figuren näher erläutert. Es zeigen:
- Figur 1: eine erfindungsgemäße Stellvorrichtung, bei welcher der Schlitten von dem Mitnehmer geführt wird,
- Figur 2a und 2b: eine erfindungsgemäße Stellvorrichtung mit jeweils einer separaten Führung für den Mitnehmer und den Schlitten, wobei der Schlitten durch eine Feder mit einem raumfesten Gegenlager vorgespannt wird,
- Figur 3a und 3b: eine erfindungsgemäße Stellvorrichtung mit einer separaten Führung für den Schlitten und den Mitnehmer, wobei der Schlitten durch eine Feder zwischen dem Schlitten und dem Mitnehmer vorgespannt wird,
- Figur 4a-4d: verschiedene Formen von Ausgleichselementen zum Ausgleich von geringfügigen Stellfehlern,
- Figur 5a und 5b: ein alternatives Ausführungsbeispiel einer erfindungsgemäßen Stellvorrichtung mit einer ortsfesten Entriegelungsvorrichtung sowie
- Figur 6: ein weiteres alternatives Ausführungsbeispiel.

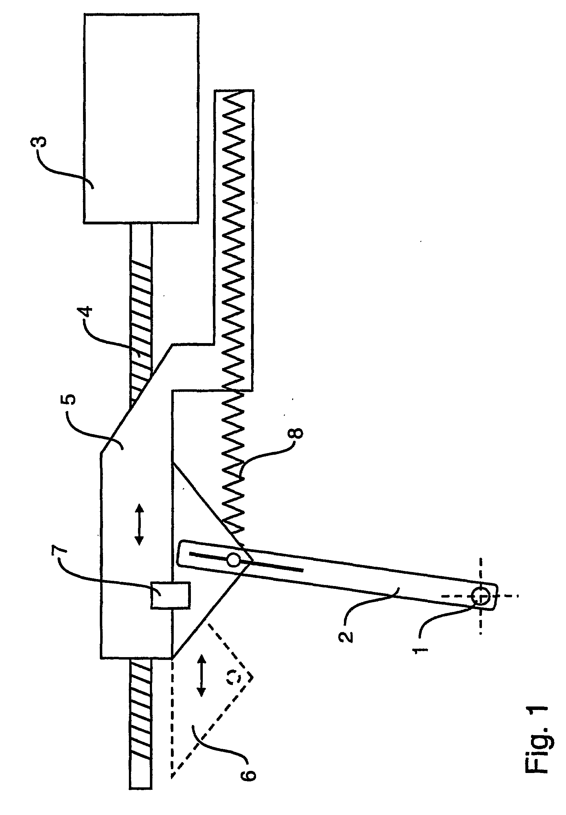

Die in Figur 1 als bevorzugtes Ausführungsbeispiel der Erfindung dargestellte Stellvorrichtung ermöglicht die Einstellung des Vorwahlbereichs bei einem Automatikgetriebe für einen Personenkraftwagen, wobei der Vorwahlbereich des Automatikgetriebes durch die Winkelstellung einer Steuerwelle 1 als Steuerelement legt wird.

An der Steuerwelle 1 ist ein Hebel 2 befestigt, da für eine Drehung der Steuerwelle 1 Drehmomente von bis zu 12 Nm erforderlich sind.

Diese Drehmomente werden von einem Elektromotor 3 als Stellglied aufgebracht, der eine Schneckenwelle 4 aufweist, wobei die Schneckenwelle 4 den Vorteil einer Selbsthemmung bietet. Alternativ zu der Schneckenwelle 4 kann als Spindel zum Antrieb des Spindelgehäuses 5 jedoch auch eine Welle ohne Selbsthemmung verwendet werden.

Die Schneckenwelle 4 wirkt auf eine Spindelmutter, die in einem verschiebbar gelagerten Spindelgehäuse 5 als Mitnehmer angeordnet ist, so dass das Spindelgehäuse 5 von dem Elektromotor 3 verschoben werden kann.

Weiterhin weist das Spindelgehäuse 5 eine Führung für einen Schlitten 6 auf, so dass der Schlitten 6 relativ zu dem Spindelgehäuse 5 und parallel zu diesem verschiebbar ist.

Das Spindelgehäuse 5 und der Schlitten 6 können jedoch durch ein elektromagnetisches Verriegelungselement 7 miteinander verriegelt werden, wodurch eine Verschiebung des Schlittens 6 relativ zu dem Spindelgehäuse 5 verhindert wird.

Der Schlitten 6 weist einen Anlenkpunkt auf, über den der Schlitten 6 mit dem Hebel 2 verbunden ist, so dass eine Verschiebung des Schlittens 6 eine Drehung des Hebels 2 und der Steuerwelle 1 bewirkt, wodurch der gewünschte Vorwahlbereich des Automatikgetriebes eingestellt werden kann.

Schließlich ist noch ein Energiespeicher in Form einer Feder 8 vorgesehen, die zwischen dem Spindelgehäuse 5 und dem Schlitten 6 angeordnet ist und den Schlitten 6 gegenüber dem Spindelgehäuse 5 vorspannt.

Im folgenden wird nun zunächst der Normalbetrieb der in Figur 1 dargestellten Stellvorrichtung beschrieben. In diesem Zustand ist die Stromversorgung des Personenkraftwagens funktionsfähig, so dass das Verriegelungselement 7 das Spindelgehäuse 5 mit dem Schlitten 6 verriegelt. Der Elektromotor 3 kann deshalb über die Schneckenwelle 4 sowohl das Spindelgehäuse 5 als auch den Schlitten 6 verschieben und dadurch den Hebel 2 in die gewünschte Stellung drehen.

Im folgenden wird nun die Funktionsweise der in Figur 1 dargestellten Stellvorrichtung bei ausgefallener Stromversorgung beschrieben. In diesem Fall löst das Verriegelungselement 7 die Verriegelung zwischen dem Spindelgehäuse 5 und dem Schlitten 6, so dass sich der Schlitten 6 unabhängig von der Stellung des Spindelgehäuses 5 frei verschieben kann. Die Vorspannung der Feder 8 führt dann dazu, dass der Hebel 2 entgegen dem Uhrzeigersinn gedreht wird, so dass das Automatikgetriebe die Parkstellung einnimmt.

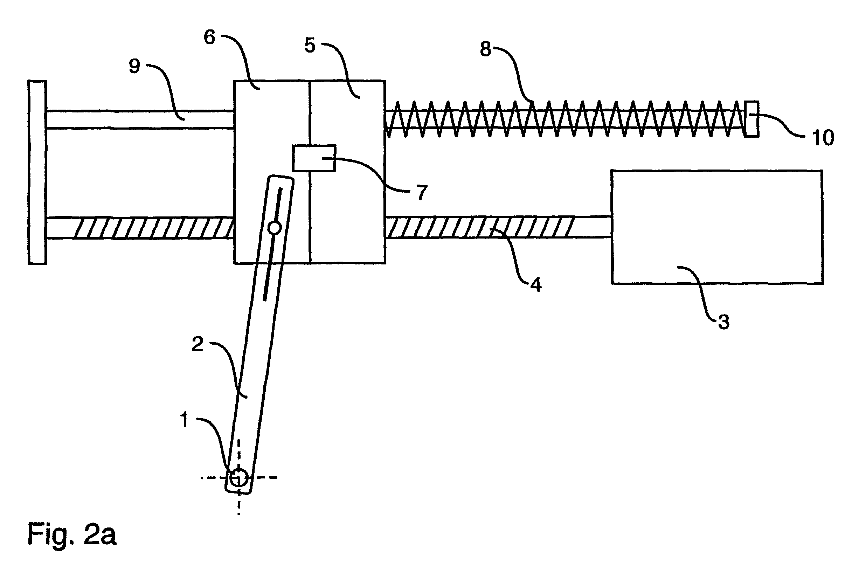

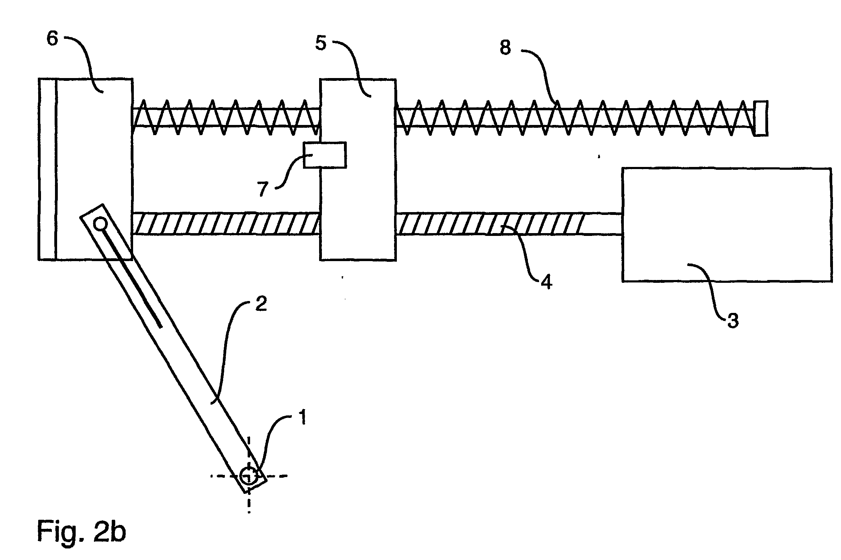

Das in den Figuren 2a und 2b dargestellte Ausführungsbeispiel stimmt weitgehend mit dem in Figur 1 gezeigten und vorstehend beschriebenen Ausführungsbeispiel überein, so dass im folgenden für entsprechende Bauelemente dieselben Bezugszeichen verwendet werden und zur Vermeidung von Wiederholungen auf die vorstehende Beschreibung verwiesen wird.

Figur 2a zeigt hierbei den Zustand der Stellvorrichtung bei funktionierender Stromversorgung, wohingegen Figur 2b den Zustand der Stellvorrichtung bei ausgefallener Stromversorgung wiedergibt.

Eine Besonderheit des in Figur 2a und 2b dargestellten Ausführungsbeispiels einer erfindungsgemäßen Stellvorrichtung besteht darin, dass für das Spindelgehäuse 5 und den Schlitten 6 jeweils eine separate Führung 9, 4 vorgesehen ist.

Eine weitere Besonderheit besteht darin, dass die Feder 8 nicht an dem Spindelgehäuse 5 angreift, sondern an einem separaten raumfesten Gegenlager 10. Die Feder 8 spannt hierbei also den Schlitten 6 gegenüber dem Gegenlager 10 vor.

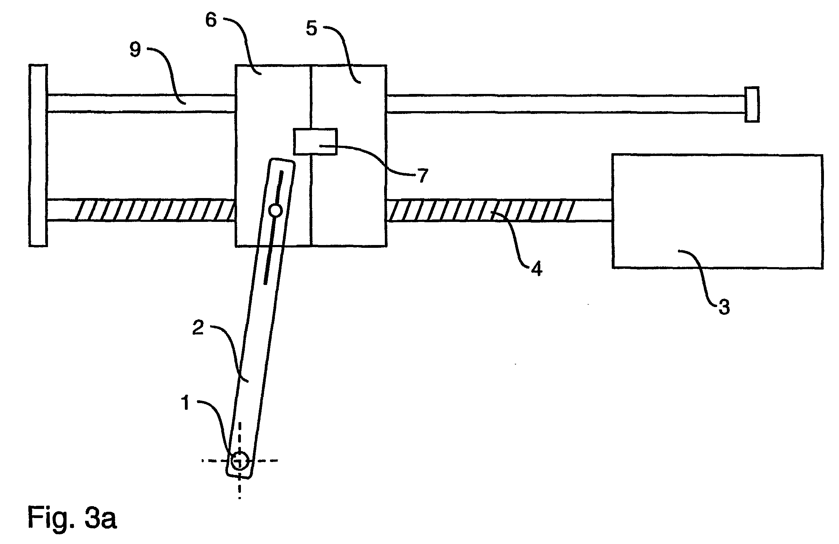

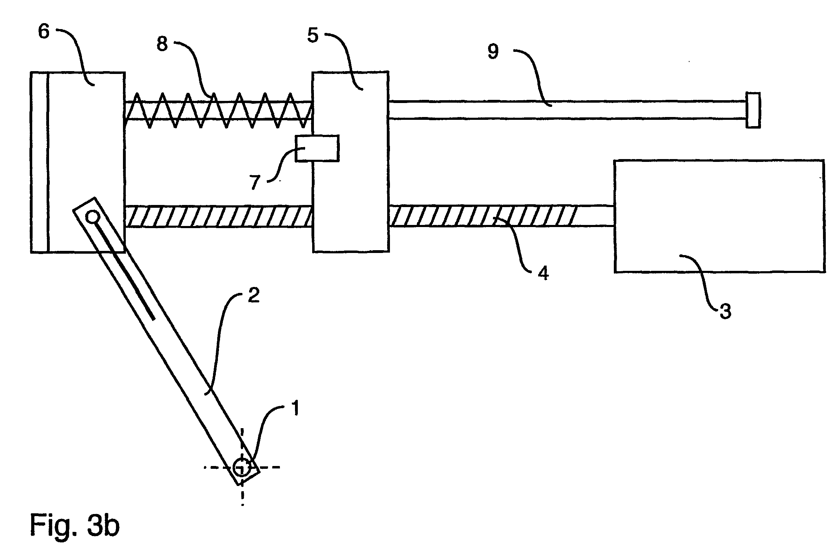

Das in den Figuren 3a und 3b dargestellte Ausführungsbeispiel einer erfindungsgemäßen Stellvorrichtung stimmt weitgehend mit dem vorstehend beschriebenen und in den Figuren 2a und 2b dargestellten Ausführungsbeispiel überein, so dass im folgenden dieselben Bezugszeichen verwendet werden und zur Vermeidung von Wiederholungen auf die vorstehende Beschreibung verwiesen wird.

Der Unterschied des in den Figuren 3a und 3b dargestellten Ausführungsbeispiels gegenüber dem in den Figuren 2a und 2b dargestellten Ausführungsbeispiels besteht im wesentlichen darin, dass die Feder 8 zwischen dem Spindelgehäuse 5 und dem Schlitten 6 angeordnet ist und den Schlitten 6 gegenüber dem Spindelgehäuse 5 vorspannt.

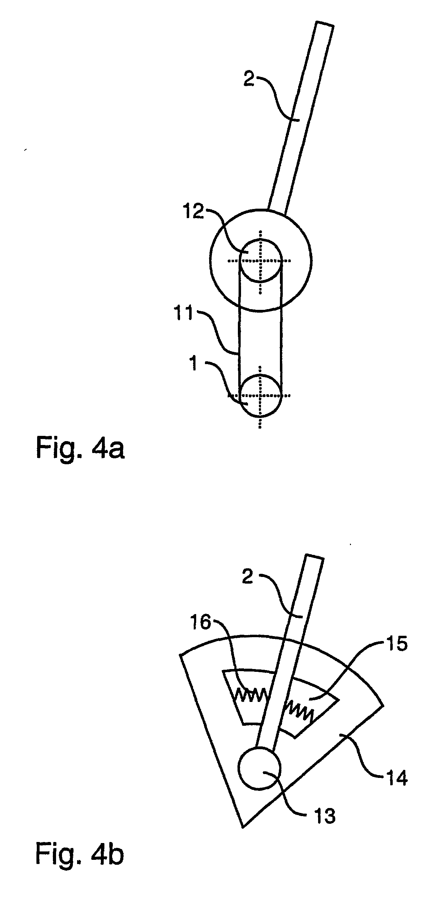

Schließlich zeigen die Figuren 4a bis 4d verschiedene Aüsführungsbeispiele von Ausgleichselementen, die geringfügige Winkelstellfehler der erfindungsgemäßen Stellvorrichtung ausgleichen können.

So ist die Steuerwelle 1 des Automatikgetriebes bei den Ausgleichselementen gemäß Figur 4a über einen elastischen Zahnriemen 11 mit einer Hilfswelle 12 verbunden, die von dem Hebel 2 gedreht wird.

Bei dem Ausgleichselement gemäß Figur 4b wirkt der Hebel 2 dagegen auf eine Hilfswelle 13, wobei an der Steuerwelle des Automatikgetriebes ein kreissegmentförmiger Hebel 14 mit ebenfalls kreissegmentförmigen Ausschnitten 15 angebracht ist, innerhalb derer der Hebel 2 verdreht werden kann.' Zwischen den seitlichen Flanken der kreissegmentförmigen Aussparung 15 und dem Hebel 2 sind hierbei Federn 16 angebracht, die den Hebel 2 ohne äußere Kräfte in eine Mittelstellung innerhalb der kreissegmentförmigen Aussparung drücken.

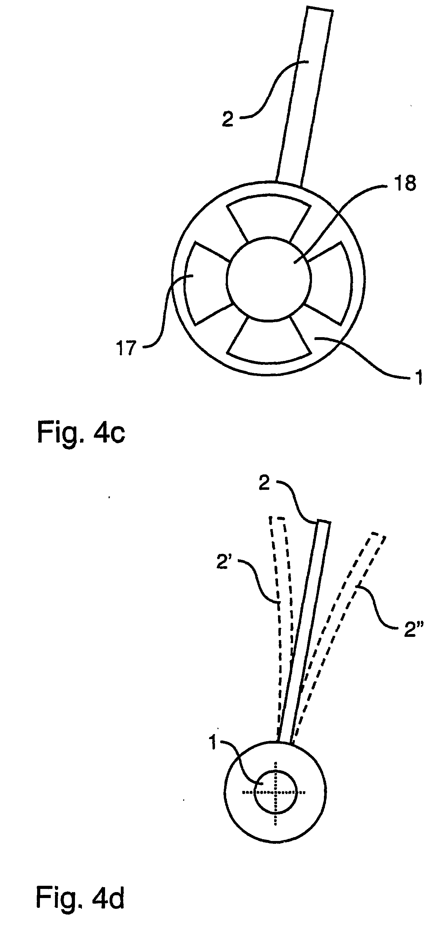

Bei dem Ausführungsbeispiel gemäß Figur 4c weist die Steuerwelle 1 des Automatikgetriebes kreissegmentförmige Aussparungen 17 auf, in die Pufferelemente aus einem elastischen dämpfenden Material eingreifen, wobei die Pufferelemente entsprechend formangepaßt sind und auf einer Hilfswelle 18 befestigt sind, die von dem Hebel 2 gedreht wird.

Schließlich ist der Hebel 2 bei dem erfindungsgemäßen Ausgleichselement gemäß Figur 4d elastisch und kann beispielsweise die Positionen 2' und 2'' einnehmen, um geringfügige Stellfehler zu kompensieren.

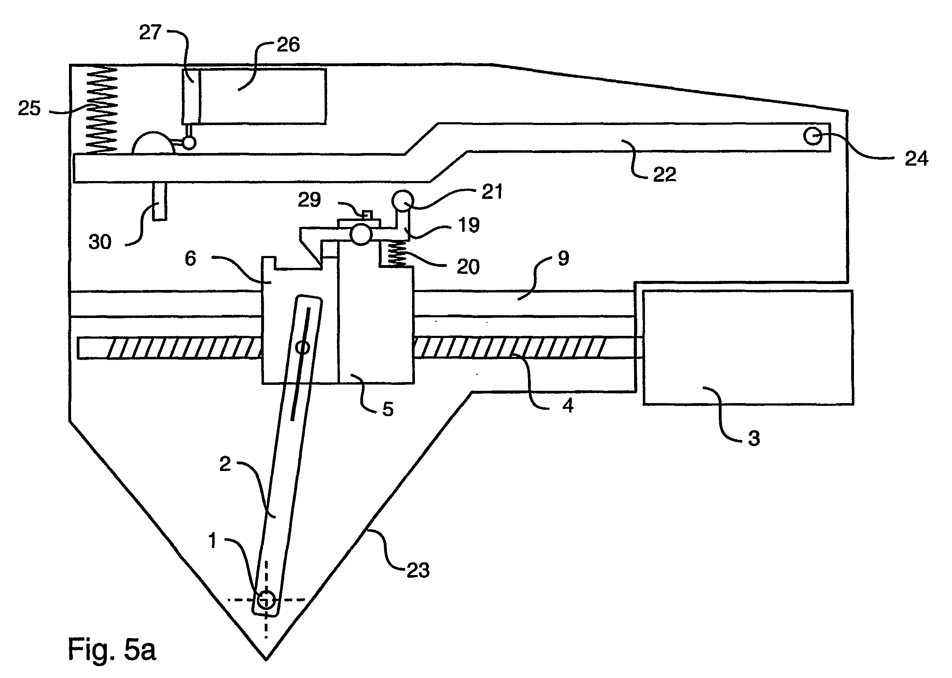

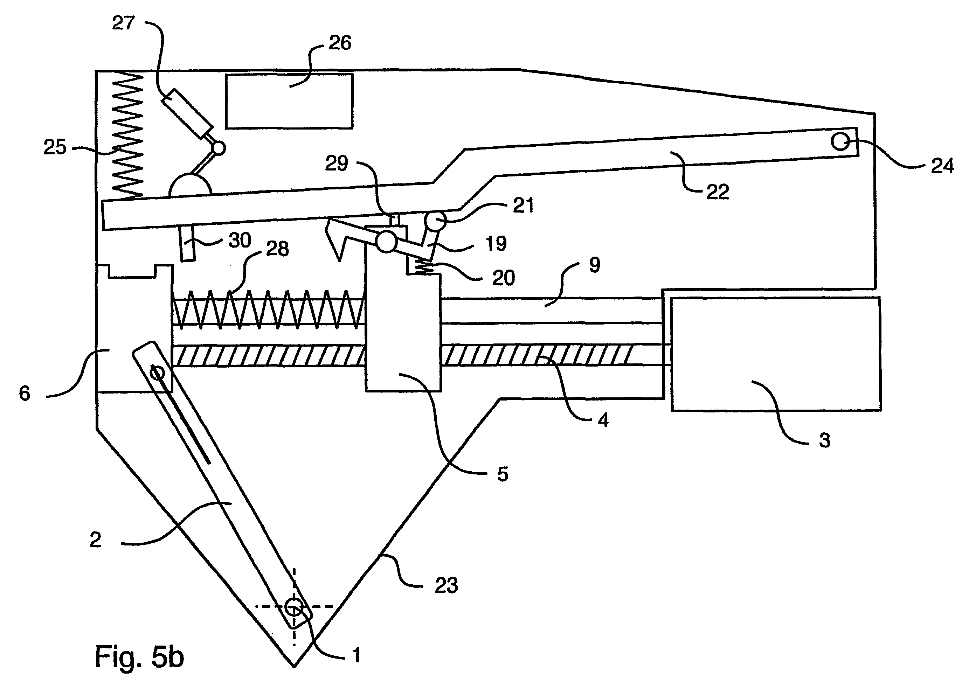

Das in den Figuren 5a und 5b dargestellte Ausführungsbeispiel einer erfindungsgemäßen Stellvorrichtung stimmt weitgehend mit dem vorstehend beschriebenen und in den Figuren 3a und 3b dargestellten Ausführungsbeispiel überein, so dass im folgenden dieselben Bezugszeichen verwendet werden und zur Vermeidung von Wiederholungen auf die vorstehende Beschreibung verwiesen wird.

Die Besonderheit des in den Figuren 5a und 5b dargestellten Ausführungsbeispiels besteht darin, dass das Entriegelungselement ortsfest ist, wie im folgenden beschrieben wird.

Zur Verriegelung des Spindelgehauses 5 mit dem Schlitten 6 ist ein Verriegelungshebel 19 als Verriegelungselement vorgesehen, der an der Oberseite des Spindelgehäuses 5 schwenkbar gelagert ist, wobei der Verriegelungshebel 19 zwischen einer Verriegelungsstellung und einer Entriegelungsstellung schwenkbar ist. In der Verriegelungsstellung greift ein an der Vorderseite des Verriegelungshebels 19 angebrachter Riegel in eine entsprechende Aussparung an der Oberseite des Schlittens 6 ein, wodurch der Schlitten 6 mit dem Spindelgehäuse 5 verriegelt wird. Weiterhin weist das Verriegelungselement eine Feder 20 auf, die den Verriegelungshebel 19 in Richtung der Verriegelungsstellung vorspannt, so dass der Verriegelungshebel 19 den Schlitten 6 mit dem Spindelgehäuse 5 verriegelt, wenn keine äußeren Kräfte auf den Verriegelungshebel 19 einwirken. Auf der dem Riegel abgewandten Seite weist der Verriegelungshebel 19 einen Entriegelungskopf 21 auf, der zur Entriegelung des Verriegelungselementes niedergedrückt werden muss.

Zur Betätigung des Verriegelungshebels 19 weist das Verriegelungselement weiterhin einen auch als Nockenschwert bezeichneten Entriegelungshebel 22 auf, der in einem Gehäuse 23 schwenkbar gelagert ist, wobei der Entriegelungshebel 22 um eine Achse 24 zwischen einer Entriegelungsstellung und einer Verriegelungsstellung schwenkbar ist. Der Entriegelungshebel 22 wird hierbei von einer Feder 25 in Richtung der Entriegelungsstellung vorgespannt. Weiterhin ist ein Elektromagnet 26 vorgesehen, um den Entriegelungshebel 22 entgegen der Vorspannungskraft der Feder 25 in der in Figur 5a dargestellten Verriegelungsstellung zu halten. Hierzu ist an der Oberseite des Entriegelungshebels 22 ein Haftteller 27 angeordnet, der von dem Elektromagneten 26 ergriffen werden kann. Der Haftteller 27 ist hierbei an dem Gehäuse 23 schwenkbar gelagert.

Im folgenden wird nun der in Figur 5a dargestellte Zustand beschrieben, in dem der Schlitten 6 mit dem Spindelgehäuse 5 verriegelt ist. In diesen Zustand greift der Verriegelungshebel 19 in den Rastvorsprung an der Oberseite des Schlittens ein, wodurch der Schlitten 6 mit dem Spindelgehäuse 5 verriegelt wird. Der Verriegelungshebel 19 wird von der Feder 20 in dieser Stellung gehalten, bis eine äußere Kraft auf den Entriegelungskopf 21 eine Drehung des Verriegelungshebels 19 im Uhrzeigersinn bewirkt.

In dem in Figur 5a dargestellten Verriegelungszustand ist der Elektromagnet 26 bestromt und zieht demzufolge den Haftteller 27 an, so dass der Entriegelungshebel 22 entgegen der Vorspannungskraft der Feder 25 in der in Figur 5a dargestellten Verriegelungsstellung gehalten wird.

Im folgenden wird nun der Übergang von dem in Figur 5a dargestellten Verriegelungszustand in den in Figur 5b dargestellten Entriegelungszustand beschrieben. Dieser Übergang erfolgt, wenn beispielsweise die Stromversorgung ausfällt. In diesem Fall wird der Elektromagnet 26 stromlos, wodurch der Haftteller 27 freigegeben wird, so dass die Feder 25 den Entriegelungshebel 22 entgegen dem Uhrzeigersinn dreht. Die Unterseite des Entriegelungshebels 22 trifft dann auf den Entriegelungskopf 21 des Verriegelungshebels 19 und dreht den Verriegelungshebel 19 im Uhrzeigersinn, bis der an der Vorderseite des Verriegelungshebels 19 angebrachte Riegel den Rastvorsprung an der Oberseite des Schlittens freigibt, wodurch der Schlitten 6 von dem Bindegehäuse entkoppelt wird. Daraufhin bewirkt eine zwischen dem Spindelgehäuse 5 und dem Schlitten 6 angebrachte Feder 28, dass der Schlitten 6 nach links geschoben wird und schließlich die Parkstellung einnimmt.

Vorstehend wurde der Übergang von dem in Figur 5a dargestellten Verriegelungszustand in den in Figur 5b dargestellten Entriegelungszustand für den Fall beschrieben, dass die Stromversorgung ausfällt. Dieser Übergang kann jedoch auch dann erfolgen, wenn der Elektromagnet 26 gegenpolig angesteuert wird, so dass der Elektromagnet 26 den Haftteller 27 abstößt.

Im folgenden wird nun der Übergang von der in Figur 5b dargestellten Entriegelungs- bzw. Parkstellung zu der in Figur 5a dargestellten Verriegelungsstellung beschrieben. Dieser Übergang erfolgt, wenn die Stromversorgung des Elektromagneten 26 nach einem zwischenzeitigen Ausfall wiederhergestellt ist. In diesem Fall dreht der Elektromotor 3 die Schneckenwelle 4, so dass das Spindelgehäuse 5 nach links in Richtung des Schlittens 6 geschoben wird. Hierbei wird die Feder 28 wieder gespannt, um den Schlitten 6 bei einem nachfolgenden Stromausfall wieder in die Parkstellung schieben zu können. Darüber hinaus klappt an der Oberseite des Spindelgehäuses 5 bei einer Entriegelung des Verriegelungshebels 19 ein Ladestift 29 heraus, der bei der Bewegung des Spindelgehäuses 5 in Richtung des Schlittens 6 dazu führt, dass der Entriegelungshebel 22 so weit angehoben wird, dass der Elektromagnet 26 den Haftteller 27 erfassen und anziehen kann. Der Entriegelungshebel 22 weist hierzu eine als Ladekurve bezeichnete Führung auf, in welcher der Ladestift 29 entlang fährt und den Entriegelungshebel 22 dabei anhebt.

Beim Erreichen des Schlittens 6 greift der Verriegelungshebel 19 automatisch in den Rastvorsprung an der Oberseite des Schlittens 6, wodurch der Schlitten 6 wieder mit dem Spindelgehäuse 5 verriegelt wird.

Weiterhin ist zu erwähnen, dass an der Unterseite des Entriegelungshebels 22 ein Vorsprung 30 angebracht ist, der in der Parkstellung verhindert, dass der Schlitten 6 von dem Spindelgehäuse 5 entriegelt wird. In der Parkstellung befindet sich das Spindelgehäuse 5 nämlich unterhalb des Vorsprungs 30, so dass der Entriegelungshebel 22 nicht soweit niedergedrückt werden kann, dass der Verriegelungshebel 19 entsprechend gedreht wird.

Anstelle des Vorsprungs 30 kann jedoch in dem Entriegelungshebel 22 an der Vorderseite auch eine Aussparung angeordnet sein, die oberhalb des Entriegelungskopfs 21 liegt und verhindert, dass der Entriegelungshebel 22 den Entriegelungskopf 21 niederdrückt, solange sich das Spindelgehäuse 5 in der Parkstellung befindet.

Alternativ zu der in den Figuren 5a und 5b dargestellten Ausführungsform des Verriegelungshebels 19 kann der Verriegelungshebel 19 auch als Kniehebel ausgeführt sein, wobei die Hebelarme beiderseits der Schwenkachse zueinander angewinkelt sind. Hierdurch lässt sich ein besseres Übersetzungsverhältnis erreichen.

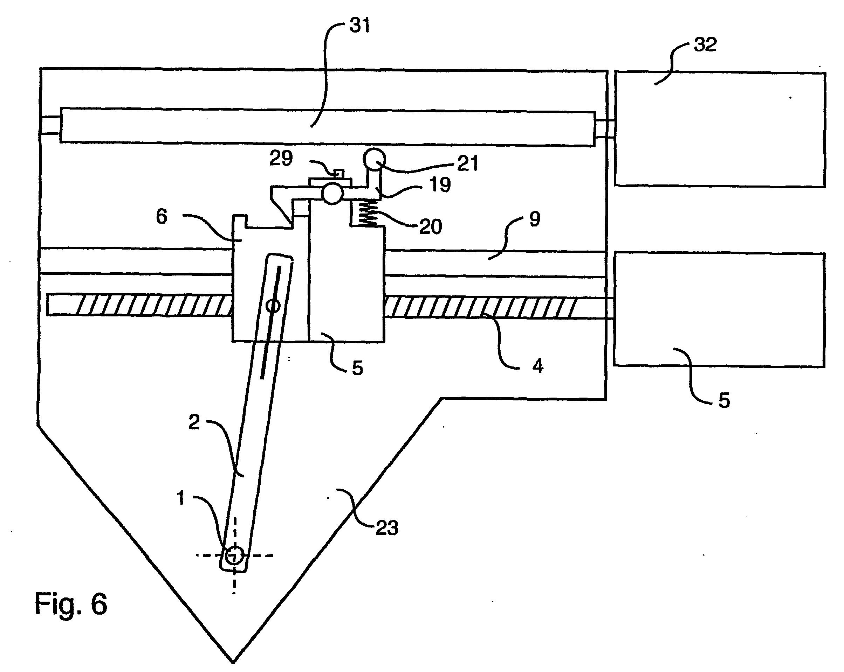

Das in Figur 6 dargestellte Ausführungsbeispiel stimmt weitgehend mit dem vorstehend beschriebenen und in den Figuren 5a und 5b beschriebenen Ausführungsbeispiel überein, so dass zur Vermeidung von Wiederholungen auf die vorstehende Beschreibung verwiesen wird und im folgenden dieselben Bezugszeichen verwendet werden.

Die Besonderheit des Ausführungsbeispiels gemäß Figur 6 besteht in der Entriegelung des Spindelgehäuses 5 von dem Schlitten 6. Hierzu ist eine drehbar gelagerte Nockenwelle 31 vorgesehen, die oberhalb des Verriegelungshebels 19 angeordnet ist und von einem Elektromotor 32 angetrieben wird. In der in Figur 6 dargestellten Stellung befindet sich die Nockenwelle 31 in der Verriegelungsstellung, d.h. die Nockenwelle 31 berührt den Entriegelungskopf 21 des Verriegelungshebels 19 nicht. Zur Entriegelung des Spindelgehäuses 5 von dem Schlitten 6 wird die Nockenwelle 31 dagegen um 90° gedreht, so dass der Verriegelungshebel 19 niedergedrückt wird.

In einer Variante weicht der Querschnitt der Nockenwelle 31 nur über einen kleinen Winkelbereich von beispielsweise 90° von der Kreisform ab. Dadurch ist die Kraftübersetzung zur Erreichung des erforderlichen Hubs schlechter als bei einem über den gesamten Umfang der Nockenwelle 31 ansteigenden, Radius. Der Vorteil hingegen liegt in der möglichen Stützung der Nockenwelle 31 durch das Gehäuse auf der gesamten Schlittenbewegungslänge. In den Endstellungen werden entsprechende Anschläge vorgesehen. Dadurch wird keine Motorlagenregelung benötigt. Der Elektromotor 32 muss in beiden Richtungen drehen können.

In einer anderen Variante dreht sich der Elektromotor 32 nur in einer Richtung. Dadurch wird die Ansteuerung des Elektromotors 32 vereinfacht. Der Elektromotor 32 betätigt je nach Einschaltdauer den Verriegelungshebel 19 mehrfach, wobei für die korrekte Entriegelung bereits eine Betätigung genügt.

Bei einer weiteren Variante weist die Nockenwelle einen über den gesamten Umfang ansteigenden Radius auf, was zu einer besseren Kraftübersetzung führt. In den Endstellungen werden Anschläge vorgesehen, so dass keine Motorlagenregelung erforderlich ist. Hierbei muss der Elektromotor 32 in beiden Richtungen drehen können.

Schließlich kann die Nockenwelle 31 auch über den gesamten Umfang einen ansteigenden Radius aufweisen, wobei der Übergang verrundet ist. Der Elektromotor 32 dreht hierbei nur einer Richtung. Dadurch wird die Ansteuerung des Elektromotors 32 vereinfacht. Der Elektromotor 32 betätigt den Verriegelungshebel 19 je nach Einschaltdauer unter Umständen mehrfach, wobei für die korrekte Entriegelung bereits eine einfache Betätigung genügt.

Sind in den Endstellungen der Nockenwelle keine Anschläge vorgesehen, so ist entweder eine Sensorik zum Erfassen der Winkelposition oder eine Kupplung zwischen dem Elektromotor 32 und der Nockenwelle 31 vorzusehen.

Ferner ist hinter dem Hebel 2 in der Schwenkebene des Hebels 2 eine Sensormatte angeordnet, die eine Erfassung des Stellwinkels des Hebels 2 ermöglicht.

## Patentansprüche

1. Stellvorrichtung für ein einstellbares Getriebe, insbesondere zur Auswahl einer Parkstellung in einem Automatikgetriebe, mit
- einem Stellglied (3),
- einem Zwischengetriebe (2, 4, 5, 6) zur Übertragung der Stellbewegung des Stellglieds (3) auf ein Steuerelement (1) des einstellbaren Getriebes, wobei das Zwischengetriebe(2, 4, 5, 6) aufweist
- einen verschiebbar gelagerten Mitnehmer (5), der über eine Spindel (4) und eine in dem Mitnehmer (5) gelagerte Spindelmutter mit dem Stellglied (3) verbunden ist,
- einen Schlitten (6), der parallel zu dem Mitnehmer (5) linear verschiebbar gelagert ist und mit dem Steuerelement (1) verbunden ist, und
- ein steuerbares Verriegelungselement (7), das den Schlitten (6) entweder mit dem Mitnehmer (5) verbindet oder von diesem trennt,
- und mit einem mechanischen Energiespeicher (8) zum Antrieb des Schlittens (6) bei einem Ausfall des Stellglieds (3).

2. Stellvorrichtung nach Anspruch 1,
**dadurch gekennzeichnet,**
**dass** der Energiespeicher (8) eine Feder (8) aufweist.

3. Stellvorrichtung nach Anspruch 2,
**dadurch gekennzeichnet,**
**dass** der Energiespeicher (8) eine Schraubenfeder aufweist.

4. Stellvorrichtung nach mindestens einem der vorhergehenden Ansprüche,
**dadurch gekennzeichnet,**
**dass** das Verriegelungselement (7) einen Elektromagneten aufweist.

5. Stellvorrichtung nach einem der Ansprüche 2 bis 4,
**dadurch gekennzeichnet,**
**dass** die Feder (8) zwischen dem Mitnehmer (5) und dem Schlitten (6) angeordnet ist und den Mitnehmer (5) gegenüber dem Schlitten (6) vorspannt.

6. Stellvorrichtung nach einem der Ansprüche 2 bis 4,
**dadurch gekennzeichnet,**
**dass** die Feder (8) zwischen dem Schlitten (6) und einem raumfesten Gegenlager (10) angeordnet ist und den Schlitten (6) gegenüber dem Gegenlager (10) vorspannt.

7. Stellvorrichtung nach mindestens einem der vorhergehenden Ansprüche,
**dadurch gekennzeichnet,**
**dass** der Mitnehmer (5) eine Führung zur verschiebbaren Lagerung des Schlittens (6) aufweist.

8. Stellvorrichtung nach mindestens einem der vorhergehenden Ansprüche,
**dadurch gekennzeichnet,**
**dass** zur verschiebbaren Lagerung des Schlittens (6) eine raumfeste Führung vorgesehen ist.

9. Stellvorrichtung nach mindestens einem der vorhergehenden Ansprüche,
**dadurch gekennzeichnet,**
**dass** die Verbindung des Stellglieds (3) mit dem Mitnehmer (5) selbsthemmend ist.

10. Stellvorrichtung nach Anspruch 9,
**dadurch gekennzeichnet,**
**dass** das Stellglied (3) einen Elektromotor (3) aufweist, der die Spindel (4) zur Verschiebung des Mitnehmers antreibt.

11. Stellvorrichtung nach mindestens einem der vorhergehenden Ansprüche,
**dadurch gekennzeichnet,**
**dass** zur Entriegelung des Verriegelungselements (19) ein ortsfestes Entriegelungselement (22, 31) vorgesehen ist.

12. Stellvorrichtung nach dem vorhergehenden Anspruch,
**dadurch gekennzeichnet,**
**dass** das Verriegelungselement einen Verriegelungshebel (19) aufweist, der zwischen einer Verriegelungsstellung und einer Entriegelungsstellung schwenkbar ist, wobei der Verriegelungshebel (19) durch eine erste Feder (20) in Richtung der Verriegelungsstellung vorgespannt wird.

13. Stellvorrichtung nach dem vorhergehenden Anspruch,
**dadurch gekennzeichnet,**
**dass** das Entriegelungselement einen Entriegelungshebel (22) aufweist, der zwischen einer Verriegelungsstellung und einer Entriegelungsstellung schwenkbar ist, wobei der Entriegelungshebel (22) durch eine zweite Feder (25) in Richtung der Entriegelungsstellung vorgespannt wird und im Normalbetrieb durch einen Elektromagneten (26) in der Verriegelungsstellung gehalten wird,
wobei der Entriegelungshebel (22) in der Entriegelungsstellung den Verriegelungshebel (19) entgegen der Kraft der ersten Feder (20) in die Entriegelungsstellung bringt.

14. Stellvorrichtung nach dem vorhergehenden Anspruch,
**dadurch gekennzeichnet,**
**dass** der Verriegelungshebel ein Kniehebel ist.

15. Stellvorrichtung nach Anspruch 11,
**dadurch gekennzeichnet,**
**dass** das Entriegelungselement eine drehbar gelagerte Nockenwelle (31) ist.

16. Stellvorrichtung nach mindestens einem der vorhergehenden Ansprüche,
**dadurch gekennzeichnet,**
**dass** das Zwischengetriebe (2, 4, 5, 6) ein Ausgleichselement aufweist, um geringfügige Stellfehler auszugleichen.

17. Stellvorrichtung nach Anspruch 16,
**dadurch gekennzeichnet,**
**dass** das Ausgleichselement einen biegeelastischen Hebel (2) aufweist.

18. Stellvorrichtung nach einem der Ansprüche 16 oder 17,
**dadurch gekennzeichnet,**
**dass** das Ausgleichselement einen flexiblen Umschlingungsriemen (11) aufweist.

19. Stellvorrichtung nach dem vorhergehenden Anspruch,
**dadurch gekennzeichnet,**
**dass** der Umschlingungsriemen (11) ein Zahnriemen, ein Keilriemen, ein Flachriemen oder eine Vierkantriemen ist.

20. Stellvorrichtung nach einem der Ansprüche 16 bis 19,
**dadurch gekennzeichnet,**
**dass** das Ausgleichselement antriebsseitig und abtriebsseitig relativ zueinander drehbare Übertragungselemente aufweist, die durch mindestens eine Feder (16) gegeneinander verspannt sind.

21. Stellvorrichtung nach einem der Ansprüche 16 bis 20,
**dadurch gekennzeichnet,**
**dass** das Ausgleichselement antriebsseitig und abtriebsseitig relativ zueinander drehbare Übertragungselemente aufweist, die durch mindestens ein elastisches, dämpfendes Pufferelement miteinander verbunden sind.

## Claims

1. Setting device for an adjustable gearing mechanism, in particular for selecting a park position in an automatic gearing mechanism, with
- a setting element (3)
- an intermediate gearing mechanism (2, 4, 5, 6) to transmit the setting movement of the setting element (3) to a control element (1) of the adjustable gearing mechanism, whereby the intermediate gearing mechanism (2, 4, 5, 6) has
- a carrier (5) supported in a movable manner, which is connected via a spindle (4) and a spindle nut supported in the carrier (5) to the setting element (3),
- a slide unit (6), which is supported so that it can be displaced in a linear manner parallel to the carrier (5) and is connected to the control element (1), and
- a controllable locking element (7), which either connects the slide unit (6) to the carrier (5) or separates it from it,
- and with a mechanical energy store (8) to activate the slide unit (6) if the setting element (3) fails.

2. Setting device according to Claim 1,
**characterized in that**
the energy store (8) comprises a spring (8).

3. Setting device according to Claim 2,
**characterized in that**
the energy store (8) comprises a coil spring.

4. Setting device according to at least one of the preceding Claims,
**characterized in that**
the locking element comprises an electromagnet.

5. Setting device according to one of Claims 2 to 4,
**characterized in that**
the spring (8) is arranged between the carrier (5) and the slide unit (6) and tensions the carrier (5) in respect of the slide unit (6) .

6. Setting device according to one of Claims 2 to 4,
**characterized in that**
the spring (8) is arranged between the slide unit (6) and a spatially bounded thrust bearing (10) and tensions the slide unit (6) in respect of the thrust bearing (10).

7. Setting device according to at least one of the preceding Claims,
**characterized in that**
the carrier (5) comprises a guide to support the slide unit (6) in a movable manner.

8. Setting device according to at least one of the preceding Claims,
**characterized in that**
a spatially bounded guide is provided to support the slide unit (6) in a movable manner.

9. Setting device according to at least one of the preceding Claims,
**characterized in that**
the connection between the setting element (3) and the carrier (5) is self-locking.

10. Setting device according to Claim 9,
**characterized in that**
the setting element (3) comprises an electric motor (3), which drives the spindle (4) to displace the carrier (5).

11. Setting device according to at least one of the preceding Claims,
**characterized in that**
a fixed unlocking element (22, 31) is provided to unlock the locking element (19).

12. Setting device according to the preceding Claim,
**characterized in that**
the locking element comprises a locking lever (19), which can be moved between a lock position and an unlock position, whereby the locking lever (19) is tensioned by a first spring (20) towards the lock position.

13. Setting device according to the preceding Claim,
**characterized in that**
the unlocking element comprises an unlocking lever (22), which can be moved between a lock position and an unlock position, whereby the unlocking lever (22) is tensioned by a second spring (25) towards the unlock position and in regular operation is held in the lock position by an electromagnet (26),
whereby the unlocking lever (22) in the unlock position moves the locking lever (19) into the unlock position counter to the force of the first spring (20).

14. Setting device according to the preceding Claim,
**characterized in that**
the locking lever is a toggle joint.

15. Setting device according to Claim 11,
**characterized in that**
the unlocking element is a camshaft (31) supported in a rotatable manner.

16. Setting device according to at least one of the preceding Claims,
**characterized in that**
the intermediate gearing mechanism (2, 4, 5, 6) comprises a compensation element, to compensate for slight positioning errors.

17. Setting device according to Claim 16,
**characterized in that**
the compensation element comprises an elastic lever (2).

18. Setting device according to one of Claims 16 or 17,
**characterized in that**
the compensation element comprises a flexible contact belt (11).

19. Setting device according to the preceding Claim,
**characterized in that**
the contact belt (11) is a toothed belt, a v-belt, a flat belt or a square belt.

20. Setting device according to one of Claims 16 to 19,
**characterized in that**
the compensation element comprises transmission elements that can be rotated relative to each other on the drive side and the output side and are tensioned in respect of each other by at least one spring (16).

21. Setting device according to one of Claims 16 to 20,
**characterized in that**
the compensation element comprises transmission elements that can be rotated relative to each other on the drive side and the output side and are connected together by at least one elastic, damping, cushioning element.

## Revendications

1. Dispositif d'actionnement pour une boîte de vitesses ajustable, en particulier pour sélectionner la position de stationnement d'une boîte de vitesses automatique, comportant
- un élément d'actionnement (3),
- un entraînement intermédiaire (2, 4, 5, 6) pour transmettre le mouvement d'actionnement de l'élément d'actionnement (3) à un élément de commande (1) de la boîte ajustable, l'entraînement intermédiaire (2, 4, 5, 6) comprenant
- un entraîneur (5) logé pour déplacement et relié à l'élément d'actionnement (3) par une broche (4) et un écrou à broche logé dans l'entraîneur (5),
- un coulisseau (6) logé parallèlement à l'entraîneur (5) pour un déplacement linéaire et relié à l'élément de commande (1), et
- un élément de verrouillage commandable (7) qui relie le coulisseau (6) à l'entraîneur (5) ou qui les sépare,
- et une source d'énergie mécanique (8) pour entraîner le coulisseau (6) lors d'une défaillance de l'élément d'actionnement (3).

2. Dispositif d'actionnement selon la revendication 1, **caractérisé en ce que** la source d'énergie (8) comprend un ressort (8).

3. Dispositif d'actionnement selon la revendication 2, **caractérisé en ce que** la source d'énergie (8) comprend un ressort hélicoïdal.

4. Dispositif d'actionnement selon l'une au moins des revendications précédentes, **caractérisé en ce que** l'élément de verrouillage (7) comporte un électroaimant.

5. Dispositif d'actionnement selon l'une des revendications 2 à 4, **caractérisé en ce que** le ressort (8) est disposé entre l'entraîneur (5) et le coulisseau (6) et précontraint l'entraîneur (5) par rapport au coulisseau (6).

6. Dispositif d'actionnement selon l'une des revendications 2 à 4, **caractérisé en ce que** le ressort (8) est disposé entre le coulisseau (6) et une butée fixe stationnaire (10) et précontraint le coulisseau (6) par rapport à la butée fixe (10).

7. Dispositif d'actionnement selon l'une au moins des revendications précédentes, **caractérisé en ce que** l'entraîneur (5) comprend un guidage pour le logement déplaçable du coulisseau (6).

8. Dispositif d'actionnement selon l'une au moins des revendications précédentes, **caractérisé en ce qu'**un guidage fixe stationnaire est prévu pour le logement déplaçable du coulisseau (6).

9. Dispositif d'actionnement selon l'une au moins des revendications précédentes, **caractérisé en ce que** la connexion entre l'élément d'actionnement (3) et l'entraîneur (5) est autobloquante.

10. Dispositif d'actionnement selon la revendication 9, **caractérisé en ce que** l'élément d'actionnement (3) comprend un moteur électrique (3) qui entraîne la broche (4) pour déplacer l'entraîneur.

11. Dispositif d'actionnement selon l'une au moins des revendications précédentes, **caractérisé en ce qu'**un élément de déverrouillage (22, 31) est prévu pour déverrouiller l'élément de verrouillage (19).

12. Dispositif d'actionnement selon la revendication précédente, **caractérisé en ce que** l'élément de verrouillage comprend un levier de verrouillage (19) qui est pivotable entre une position de verrouillage et une position de déverrouillage, le levier de verrouillage (19) étant précontraint par un premier ressort (20) en direction de la position de verrouillage.

13. Dispositif d'actionnement selon la revendication précédente, **caractérisé en ce que** l'élément de déverrouillage comprend un levier de déverrouillage (22) qui est pivotable entre une position de verrouillage et une position de déverrouillage, le levier de déverrouillage (22) étant précontraint par un deuxième ressort (25) en direction de la position de déverrouillage et retenu en fonctionnement normal par un électroaimant (26) dans la position de verrouillage, le levier de déverrouillage (22) menant le levier de verrouillage (19) dans la position de déverrouillage contre la force du premier ressort (20).

14. Dispositif d'actionnement selon la revendication précédente, **caractérisé en ce que** le levier de verrouillage est un levier à genouillère.

15. Dispositif d'actionnement selon la revendication 11, **caractérisé en ce que** l'élément de déverrouillage est un arbre à cames (31) logé de manière rotative.

16. Dispositif d'actionnement selon l'une au moins des revendications précédentes, **caractérisé en ce que** l'entraînement intermédiaire (2, 4, 5, 6) comporte un élément de compensation afin d'égaliser des petites erreurs de commande.

17. Dispositif d'actionnement selon la revendication 16, **caractérisé en ce que** l'élément de compensation comprend un levier élastique à la flexion (2).

18. Dispositif d'actionnement selon l'une des revendications 16 ou 17, **caractérisé en ce que** l'élément de compensation comprend une courroie d'enroulement flexible (11).

19. Dispositif d'actionnement selon la revendication précédente, **caractérisé en ce que** la courroie d'enroulement (11) est une courroie dentée, une courroie trapézoïdale, une courroie plate ou une courroie carrée.

20. Dispositif d'actionnement selon l'une des revendications 16 à 19, **caractérisé en ce que** l'élément de compensation comporte côté entrée d'entraînement et côté sortie d'entraînement des éléments de transmission pouvant tourner l'un par rapport à l'autre et qui sont contraints l'un contre l'autre par au moins un ressort (16).

21. Dispositif d'actionnement selon l'une des revendications 16 à 20, **caractérisé en ce que** l'élément de compensation comporte côté entrée d'entraînement et côté sortie d'entraînement des éléments de transmission rotatifs l'un par rapport à l'autre qui sont connectés l'un à l'autre par au moins un élément tampon amortissant et élastique.
